(19) Europäisches Patentamt
European Patent Office
Office européen des brevets

(11) Veröffentlichungsnummer: **0 457 173 A2**

(12) # EUROPÄISCHE PATENTANMELDUNG

(21) Anmeldenummer: **91107455.7**

(22) Anmeldetag: **08.05.91**

(51) Int. Cl.5: **C08F 279/00**, //(C08F279/00, 212:04,220:10)

(30) Priorität: **16.05.90 DE 4015654**

(43) Veröffentlichungstag der Anmeldung: **21.11.91 Patentblatt 91/47**

(84) Benannte Vertragsstaaten: **BE DE ES FR GB IT NL**

(71) Anmelder: **BASF Aktiengesellschaft
Carl-Bosch-Strasse 38
W-6700 Ludwigshafen(DE)**

(72) Erfinder: **Schwaben, Hans-Dieter, Dr.
Lindenstrasse 6 a
W-6721 Freisbach(DE)**
Erfinder: **Kindler, Hubert, Dr.
Westring 19
W-6700 Ludwigshafen(DE)**
Erfinder: **Mittnacht, Hans, Dr.
Zinkgraefstrasse 44
W-6940 Weinheim(DE)**

(54) **Thermoplastische Formmassen.**

(57) Thermoplastische Formmasse aus einer Hartmatrix A aus mindestens einem vinylaromatischen Monomeren a1 und mindestens einem polaren Comonomeren a2 und einer Weichphase B, enthaltend als Comonomere(s) a2 1,5 bis 6,5 Gew.-% eines Esters der Acryl- oder Methacrylsäure.

EP 0 457 173 A2

Die Erfindung betrifft thermoplastische Formmassen aus einer Hartmatrix (A), aus mindestens einem monovinylaromatischen Monomeren, insbesondere Styrol (a1) und mindestens einem weiteren polaren Comonomeren (a2) und einer Weichphase (B); die Formmasse ist erhältlich durch Polymerisation der die Hartmatrix aufbauenden Monomeren a1 und a2 in Gegenwart einer kautschukartigen Pfropfgrundlage.

Für die nachstehend beschriebene Erfindung sind z.B. die folgenden Druckschriften zum Verständnis heranzuziehen:

(1) DE-A-1770392
(2) DE-A-2525019
(3) EP-A-29174
(4) EP-A-274109
(5) EP-A-208382

Kautschukmodifizierte thermoplastische Formmassen, die auf einer Polymerisation von monovinylaromatischen Monomeren, wie beispielsweise Styrol oder $\alpha$-Methylstyrol, in Gegenwart eines Kautschuks basieren, sind seit langem bekannt und werden in großem Umfang zur Herstellung von Verpackungsgegenständen, Kühlschränken und in jüngerer Zeit auch für Spielwaren und Gehäuse von Elektrogeräten, wie z.B. Staubsaugern, Fernseh- und Rundfunkgeräten, Telefonen, Computern etc. eingesetzt.

Diese Formmassen sind "zweiphasig" aufgebaut, d.h. sie bestehen aus einer Hartmatrix, z.B. aus Polystyrol und einer darin in Form kleiner Partikel (Teilchen) dispergierten Weichphase. Formmassen dieser Art können erhalten werden durch eine Polymerisation des oder der monovinylaromatischen Monomeren in Gegenwart von gelöstem Kautschuk. Ein solches Verfahren ist in (1) beschrieben.

Es ist bekannt, daß es möglich ist, durch spezielle Art der Verfahrensparameter und gezielte Auswahl des eingesetzten Kautschuks die Art und Größe sowie die Teilchengrößenverteilung der Weichphase bei diesen thermoplastischen Formmassen in großem Ausmaß zu verändern. In (2) und (3) werden Formmassen mit einem mittleren Teilchendurchmesser von mind. 4 µm resp. 3,5 µm beschrieben. Diese Formmassen besitzen eine matte Oberfläche und sind spannungsrißbeständig gegen Fluorchlorkohlenwasserstoffe sowie gegen in Lebensmitteln vorkommende Öle und Fette und werden z.B. zur Herstellung von Kühlschränken benutzt.

In (4) werden Formmassen und ein Verfahren zu deren Herstellung beschrieben, bei denen die Weichphase in Form sogenannter Kapselteilchen vorliegt, die sehr feinteilig sind und einen mittleren Durchmesser zwischen 0,25 und 0,38 µm besitzen. Diese Formmassen zeichnen sich insbesondere durch einen hohen Oberflächenglanz aus und besitzen außerdem eine hohe Schlagzähigkeit.

In (5) sind Formmassen beschrieben, bei denen Ester der Acrylsäure (z.B. n-Butylacrylat) einpolymerisiert sind. Diese zeichnen sind insbesondere durch verbesserte Fließeigenschaften aus, allerdings unter Inkaufnahme einer verringerten Zähigkeit und Steifigkeit im Vergleich zu solchen Formmassen, bei denen kein Ester der Acrylsäure einpolymerisiert wurde.

Es ist andererseits bekannt, daß eine Zähmodifizierung von z.B. Styrolpolymerisaten stets mit einem erheblichen Rückgang in der Steifigkeit gekoppelt ist.

Besonders bei der Herstellung großflächiger Fertigteile, als Beispiel seien hier Gehäuse von sehr großen Fernsehgeräten genannt, spielt jedoch ein Mindestmaß an Steifigkeit der thermoplastischen Formmasse neben ihrer Zähigkeit eine zentrale Rolle. Erreicht die Steifigkeit dieses Mindestmaß nicht, so kommt es vor, daß das Fertigteil nicht dimensionsstabil genug ist, d.h. es verformt sich und dies führt dazu, daß der Einsatz der bekannten Formmassen nicht möglich ist.

Der Anwender, der schlagzähe Formmassen ausreichender Steifigkeit benötigt, muß dann auf deutlich kostspieligere Werkstoffe, wie z.B. zähmodifizierte Styrol-Acrylnitril-Polymerisate (sog. ABS-Polymerisate) ausweichen.

Aufgabe der Erfindung war es, Formmassen der o.g. Art zur Verfügung zu stellen, die schlagzäh sind und eine erhöhte Steifigkeit aufweisen.

Diese Aufgabe wird gelöst durch eine Formmasse der eingangs angegebenen Art, die zweiphasig aufgebaut ist, d.h. aus einer Hartmatrix A und einer Weichphase B besteht, nämlich - bezogen auf A + B -

A: 90 - 60 Gew.-%, vorzugsweise 85 - 60 Gew.-% und insbesondere 80 - 65 Gew.-% A und
B: 10 - 40 Gew.-%, vorzugsweise 15 - 40 Gew.-% und insbesondere 20 - 35 Gew.-% B.

Bezogen auf 100 Gewichtsteile A + B können Zusatzstoffe in einer Menge von bis zu 25 Gewichtsteilen, vorzugsweise 1 - 20 Gewichtsteilen, bezogen auf die fertige Masse, zugegen sein.

Erfindungsgemäß enthält die Formmasse die Monomeren a1 und a2, nämlich ein vinylaromatisches Monomer a1, insbesondere Styrol einerseits und - bezogen auf die Menge an A und B - 1,5 bis 6,5 Gew.-% des oder der Monomeren a2, die in diesem Falle ausgewählt sind aus der Gruppe der Ester der Acryl- oder Methacrylsäure. Ersichtlich ist somit der Erfindungsgedanke, ein Comonomerengemisch aus insbesondere Styrol oder seinen Äquivalenten und einer bestimmten, besonders geringen Menge an (Meth)acrylester zu

verwenden.

Im einzelnen ist hierzu folgendes zu sagen:

Komponente A

Die Hartmatrix der erfindungsgemäßen Formmasse ist aufgebaut aus statistischen Copolymeren eines monovinylaromatischen Monomeren mit 8 bis 12 C-Atomen und mindestens einem weiteren polaren Comonomeren aus der Gruppe der Ester der Methacrylsäure und der Acrylsäure.

Als monovinylaromatische Monomere kommen Styrol sowie alkylsubstituierte Styrole, wie z.B. α-Methylstyrol oder para-Methylstyrol in Betracht.

Bevorzugt wird entweder Styrol alleine oder eine seiner Mischungen mit α-Methylstyrol oder p-Methylstyrol verwendet.

Bezogen auf A beträgt der Anteil des bzw. der monovinylaromatischen Monomeren 93,5 Gew.-% bis 98,5 Gew.-%, vorzugsweise 94 Gew.-% bis 98 Gew.-% und insbesondere 95 Gew.-% bis 97 Gew.-%.

Als Ester der Methacrylsäure und der Acrylsäure sind solche der allgemeinen Formeln

$$CH_2{=}CH{-}COO{-}R_1 \quad \text{und} \quad CH_2{=}C(CH_3){-}COOR_2$$

zu verstehen. Als Reste $R_1$ und $R_2$ werden bevorzugt gesättigte Alkylreste der allgemeinen Formel $C_xH_y$ verwendet. Insbesondere kommen solche Ester der Methacrylsäure und der Acrylsäure zum Einsatz, bei denen die Reste $R_1$ und $R_2$ die Bedingung der allgemeinen Formel $C_nH_{(2n+1)}$ erfüllen, wobei n = 3, 4 oder 5 ist.

Einer oder mehrere dieser Ester werden in einer Menge, bezogen auf A, von insgesamt 1,5 bis 6,5 Gew.-%, bevorzugt zwischen 2 und 6 Gew.-% und insbesondere zwischen 3 und 5 Gew.-% eingesetzt.

Dieser Gehalt an Comonomeren a2 kann am Fertigprodukt und an der Hartmatrix leicht analytisch z. B. über eine Sauerstoffgehaltsbestimmung ermittelt werden. Zur Bestimmung des Comonomerengehaltes der Hartmatrix wird das Polymerisat bei 25° C in Toluol gelöst, der unlösliche Gelgehalt in einer Zentrifuge bei einer Beschleunigung von 30 000 g abgeschleudert und die überstehende klare Flüssigkeit, die jetzt nur noch die Hartmatrix A gelöst enthält, dekantiert, eingedampft und am Rückstand dann anschließend in einer Elementaranalyse der Sauerstoffgehalt bestimmt.

Die Molmasse der Hartmatrix liegt zwischen 100 000 und 250 000 g, bevorzugt zwischen 150 000 und 200 000 g.

Komponente B

Die erfindungsgemäße Formmasse weist als Komponente B eine Weichphase auf, die fein dispergiert in Form sog. Kautschukteilchen in der Hartmatrix vorliegt.

Die Gegenwart der Weichphase und die Form der dispergierten Kautschukteilchen kann z.B. durch eine elektronenmikroskopische Aufnahme an kontrastierten Dünnschnitten der Formmasse nachgewiesen werden.

Die Form und Größe der Kautschukpartikel in schlagzähmodifizierten Styrolpolymerisaten kann stark variieren. Dies ist z.B. bei B. J. Schmitt in "Angew. Chem." 91 (1979) S. 286-309 und A. Echte in "Die Angew. Makromol. Chem." 58/59 (1977) S. 175-198 beschrieben.

Die Kautschukpartikel der erfindungsgemäßen Formmassen liegen entweder in Form sogenannter Kapselteilchen oder sogenannter Zellenteilchen vor. Der mittlere Durchmesser (Volumenmittel) dieser Teilchen liegt dabei zwischen 200 bis 1000 nm, bevorzugt zwischen 250 bis 800 nm.

Die Komponente B ist aufgebaut aus einer elastomeren Pfropfgrundlage und sog. okkludiertem und gepfropften Copolymeren aus den die Komponente A aufbauenden Monomeren a1 und a2.

Als Elastomere werden die üblicherweise für die Schlagzähmodifizierung von Styrolpolymerisaten gebräuchlichen natürlichen und synthetischen Kautschuke wie z.B. Polybutadiene, Polyisoprene oder Mischpolymerisate von Styrol und Butadien verwendet, die eine Glasübergangstemperatur unter -20° C besitzen. Im Sinne der vorliegenden Erfindung als besonders vorteilhaft sind zur Erzeugung der Zellenteilchen solche Polybutadiene, die in gelöster Form (5 Gew.-Teile Polybutadien gelöst in 95 Gew.-Teilen Styrol) bei 25° C eine Viskosität zwischen 30 und 150 mPa s, besonders bevorzugt zwischen 60 und 120

mPa s aufweisen und zur Erzeugung der Kapselteilchen solche Mischpolymerisate aus Styrol und Butadien, bei denen ein Teil des Styrols und des Butadiens blockförmig vorliegen und der Gesamtstyrolgehalt zwischen 20 und 60 Gew.-%, insbesondere zwischen 30 und 50 Gew.-% liegt und das Gewichtsmittel der Molmasse zwischen 100 000 und 300 000 g, bevorzugt zwischen 150 000 und 250 000 g liegt.

Der Gehalt an Elastomeren kann am Endprodukt mittels einer Titration (Bestimmung der Iodzahl) bestimmt werden. Er liegt, bezogen auf die Formmasse, zwischen 3 und 25 Gew.-%, bevorzugt zwischen 5 und 20 Gew.-% und insbesondere zwischen 7 und 17 Gew.-%.

Die weiteren Bestandteile der Weichphase, nämlich das okkludierte und das gepfropfte Copolymere können mit einfachen analytischen Methoden nur als Summe erfaßt und nachgewiesen werden und zwar als Differenz zwischen Gelgehalt und Elastomergehalt.

Herstellung der erfindungsgemäßen Formmasse

Die erfindungsgemäßen Formmassen werden hergestellt durch Polymerisation der Monomeren in Gegenwart gelösten Kautschuks. Dabei können bis zu 25 Gew.-% eines Lösungsmittels zugesetzt werden. Geeignet hierfür sind aromatische Kohlenwasserstoffe wie z.B. Toluol, Ethylbenzol oder Xylol. Bevorzugt ist das Ethylbenzol. Die Polymerisation kann entweder kontinuierlich oder absatzweise erfolgen. Ein kontinuierliches Verfahren ist in (1) und ein absatzweises in der DE-A-26 13 352 hinreichend beschrieben.

Als polymerisationsbeschleuniger können organische Peroxide verwendet werden. Hier kommen Alkyl- oder Acylperoxide, Hydroperoxide, Peroxiester oder Peroxicarbonate in Frage. Vorzugsweise verwendet man pfropfaktive Initiatoren wie Dibenzoylperoxid, Dicumylperoxid, t-Butylperoxi-2-ethylhexanoat, t-Butylperpivalat, t-Butylperneodecanoat oder 1,1-Di-(t-butylperoxi)-3,3,5-trimethylcyclohexan. Diese Initiatoren werden, bezogen auf die Monomeren a1 und a2, in Mengen von 0,005 bis 0,2 Gew.-% eingesetzt.

Als Molekulargewichtsregler können die üblicherweise eingesetzten Merkaptane mit 4 bis 18 C-Atomen eingesetzt werden. Besonders bewährt haben sich das n-Butyl, das n-Octyl sowie das n- und t-Dodecylmercaptan. Diese Merkaptane werden in Mengen von 0,01 bis 0,3 Gew.-% bezogen auf die Monomeren a1 und a2 eingesetzt. Die Polymerisation erfolgt in an sich bekannter Weise dadurch, daß die Lösung des Kautschuks in der Monomerenmischung, evtl. in Gegenwart des indifferenten Lösungsmittels erhitzt wird. Polymerisationsbeschleuniger und Molekulargewichtsregler können entweder zu Beginn oder im späteren Verlauf der Polymerisation zugegeben werden. Wenn pfropfaktive Initiatoren verwendet werden, dann ist es vorteilhaft, diese vor Beginn der Polymerisation zuzusetzen.

Die polymerisierende Kautschuklösung ist zunächst einphasig. Kurz nach Beginn der Polymerisation trennt sich die Lösung in zwei Phasen, von denen zunächst die Lösung des Kautschuks in der Monomeren/Lösungsmittel-Mischung die kohärente Phase bildet, während die zweite, eine Lösung des Copolymeren in der Monomeren/Lösungsmittelmischung, in der ersten suspendiert bleibt. Mit steigendem Umsatz vermehrt sich unter Monomerenverbrauch die zweite Phase, d.h. es wird ständig zusätzliches Copolymerisat gebildet; dabei tritt dann ein Wechsel der Phasenkohärenz auf (Phaseninversion).

Neben diesem Vorgang läuft eine Pfropfreaktion ab, bei der Pfropfäste aus Copolymerisat mit den Kautschukmolekülen chemisch verknüpft werden. Dieser Vorgang ist bekannt und z.B. bei Fischer, "Die Angew. Makromol. Chem." 33 (1973) S. 35-74, ausführlich beschrieben.

Während der Polymerisation, insbesondere während des ersten Umsatzdrittels, der sog. Vorpolymerisation, muß gut gerührt werden. Es ist bekannt, wie in dieser Phase der Polymerisation die gewünschte Größe der Weichphasenpartikel eingestellt wird. Die beanspruchte Einstellung der mittleren Teilchengröße auf $d_{50}$-Werte zwischen 0,20 µm und 1,0 µ erfolgt durch Scherung nach der Phaseninversion.

Diese Scherung, mit der die zu polymerisierende Lösung beansprucht wird, ist in hohem Maße abhängig von der Anlage, in der die Polymerisation erfolgt. Daher sind bei der Übertragung des Verfahrens von einer Anlage in eine andere, z.B. von einer kleineren in eine größere, oder von einer absatzweise in eine kontinuierlich betriebene stets einige orientierende Versuche notwendig, um die Scherbedingungen herauszufinden, die zu mittleren Teilchengrößen im günstigen Bereich führen. Bei einer solchen Übertragung müssen alle die Scherung der polymerisierenden Lösung beeinflussenden Parameter, darunter insbesondere die Art des Rührwerks, die Rührgeschwindigkeit, die Geometrie des Rührwerks, seine Eintauchtiefe in die polymerisierende Lösung, Einbauten in den gerührten Reaktoren, wie z.B. Strombrecher etc. berücksichtigt werden.

Die Polymerisation erfolgt im Temperaturbereich zwischen 50 und 200 °C , bevorzugt zwischen 70 und 190 °C und insbesondere zwischen 90 und 180 °C.

Die in den folgenden Beispielen und Vergleichsversuchen beschriebenen Parameter wurden wie folgt bestimmt:

- Die Viskositätszahl der Hartmatrix in ml/g analog DIN 53 724 an einer 0,5%igen Lösung in Toluol bei

23° C.

- Die Streckspannung ($N/mm^2$) nach DIN 53 455 in einem Zugversuch bei 23° C; die Probekörper werden bei 200° C gepreßt.
- Der Polybutadiengehalt titrimetrisch durch Bestimmung der Iodzahl.
- Die Lochkerbschlagzähigkeit $a_{Kl}$ ($kJ/m^2$) nach DIN 53 753 bei 23° C an Probekörpern, die bei 200° C gepreßt wurden.
- Der $d_{50}$-Wert nach der in EP-A-274 109 angegebenen Methode.
- Die Vicat-Erweichungstemperatur gemäß DIN 53 460 (Methode B).
- Der Schmelzfließindex bei 200° C mit einem Auflagegewicht von 5 kp gemäß DIN 53 735.
- Der Sauerstoffgehalt der Formmassen elementaranalytisch.
- Die Molmasse als Viskositätsmittel der Molmasse $\overline{M}_\eta$, errechnet aus der Viskositätszahl nach Umrechnung in die Grenzviskosität nach Schulz-Blaschke mittels der Mark-Houwink-Gleichung für Polystyrol (s. J. W. Breitenbach et al., Makromol. Chem. 81 (1964) S. 32 ff).
- Die 50%ige Schädigungsarbeit $W_{50}$ (Nm) im Fallbolzenversuch gemäß DIN 53 443 bei T = 23° C an Probekörpern, die eine Kastenform aufweisen. Die Probekörperherstellung erfolgte im Spritzguß mit einer Kunststofftemperatur von 280° C, einer Formtemperatur von 40° C und einer Einspritzzeit von 0,6 s.
- Der Glanz wurde an den gleichen spritzgegossenen Probekörpern gemessen wie die 50%ige Schädigungsarbeit. Die Messung erfolgte mittels eines Labor-Reflektometers der Fa. Lange, bei einem Einfallswinkel von 45°. Diese Art der Glanzmessung ist eine Relativmessung. Seine Einheit wird in Skalenteilen (SKT) bezogen auf einen von der Fa. Lange mitgelieferten Standard angegeben.

Sämtliche Polymerisationsversuche erfolgten im 10 kg-Maßstab nach einem Masse-Suspensions-Prozeß in einer Zwei-Kessel-Kaskade, bestehend aus den Kesseln 1 und 2. Im Kessel 1 (≈ 20 l Fassungsvermögen, 304 mm Durchmesser, 300 mm Höhe) wurde die Lösung des Kautschuks in der Monomerenmischung unter Rühren isotherm bis zu einem Umsatz von 35 ± 1% polymerisiert. Jedem Reaktionsansatz wurden 0,12 Teile eines handelsüblichen Antioxidans zugegeben.

Jeweils 12 kg einer Mischung aus Monomeren, Kautschuk sowie Antioxidans und ggfs. Mineralöl, Molekulargewichtsregler und Polymerisationsinitiator wurden in den Kessel gegeben. Daraus ergab sich ein Füllgrad des Kessels von ca. 66 Vol.-%, wenn eine Dichte der Mischung von 0,91 $g/cm^3$ bei T = 20° C zugrundegelegt wurde. Als Rührer wurde ein Ankerrührer (Wellendurchmesser 28 mm, Blattlänge 210 mm) mit einem Durchmesser von 285 mm verwendet, dessen Abstand vom Boden des Kessels 20 mm betrug.

Daraus folgt bei einer Füllhöhe von 215 mm bei Raumtemperatur eine Eintauchtiefe des Rührers von 195 mm.

Im Kessel 2, einem ebenfalls mit einem Ankerrührer ausgestatteten Kessel mit einem Fassungsvermögen von 40 l, wurden 18 kg Wasser, 0,18 kg eines Schutzkolloids auf Basis von Ethylenoxid und 18 g Natriumpyrophosphat vorgelegt und auf ca. 100° C gebracht. Ist in Kessel 1 der Umsatz auf den Wert von 35 ± 1% gestiegen (dies wird durch eine Feststoffgehaltsbestimmung an Proben, die dem Kessel 1 entnommen werden, ermittelt), werden 0,1 Teile Dicumylperoxid, bezogen auf die Gesamtmenge, zugesetzt. Die Rührerdrehzahl im Kessel 2 wird dann auf 300 $min^{-1}$ eingestellt und der Inhalt von Kessel 1 mittels Stickstoff über ein Verbindungsrohr innerhalb von maximal 15 Minuten in den Kessel 2 getrieben. In der derart hergestellten wäßrigen Suspension wird anschließend jeweils 6 Stunden bei T = 130° C und 6 Stunden bei T = 140° C bis zu einem Umsatz von mehr als 99% bezogen auf die Monomeren polymerisiert. Nach dieser Zeit wird der Kesselinhalt auf 30° C abgekühlt, abgelassen und die erhaltenen Proben gründlich mit Wasser gewaschen, anschließend 24 Stunden im Vakuumtrockenschrank bei 60° C und 25 mbar getrocknet. Danach erfolgt eine Konfektionierung über einen Extruder (ZSK 30, Fa. Werner & Pfleiderer), um das Produkt in Granulatform zu bringen.

Die experimentellen Bedingungen, die zur Herstellung der Formmassen gemäß den Beispielen und Vergleichsversuchen angewendet wurden, sind in der Tab. 1 aufgeführt.

Die Tab. 2 zeigt die Ergebnisse der Prüfungen an den so erhaltenen Formmassen.

Die nach Beispiel 1 und Beispiel 2 erhaltenen Massen, die eine Kapselteilchenmorphologie aufweisen, zeigen, daß durch Einsatz von 4,5% Gew.-% n-Butylmethacrylat bzw. 4,0 Gew.-% n-Butylacrylat die Steifigkeit, wofür hier als Maß die Streckspannung angegeben wird - im Vergleich zu den nach Vergleichsversuch 1 erhaltenen - um 6 bis 7 $N/mm^2$, d.h. um 25% angehoben wird. Dies ist erreichbar, ohne daß die Zähigkeit ($W_{50}$ bzw. $a_{Kl}$) abnimmt. Der Glanz der n-Butylmethacrylat oder n-Butylacrylat enthaltenden erfindungsgemäßen Formmassen liegt überraschenderweise deutlich höher als der des Vergleichsversuchs 1.

Für die Formmasse gemäß Beispiel 3 wurden 8 Gew.-% Polybutadien mit einer Viskosität von 90 mPa s (5 Gew.-% in Toluol) eingesetzt. Dieses Produkt zeichnet sich durch eine hohe Steifigkeit aus. Diese liegt

wiederum um 7 $N/mm^2$ höher als im Vergleichsversuch 4. Erhöht man die einpolymerisierte Menge an n-Butylacrylat auf 7 Gew.-% oder 9 Gew.-% (Vergleichsversuche 2 + 3), so bleibt die Steifigkeit zwar erhalten, die Zähigkeit aber sinkt deutlich (der $W_{50}$-Wert auf ca. 50% bzw. 33% des Ausgangswertes!) Außerdem wird die Wärmeformbeständigkeit drastisch erniedrigt.

Ein Vergleich von Beispiel 4 mit Vergleichsversuch 5 macht deutlich, daß 4 Gew.-% n-Butylmethacrylat die Steifigkeit merklich erhöhen, während bei 1 Gew.-% n-Butylmethacrylat praktisch das gleiche Steifigkeitsniveau erreicht wird wie im Vergleichsversuch 1, bei dem kein Comonomeres eingesetzt wurde.

Beispiel 5 und Vergleichsversuch 6 machen deutlich, daß auch beim n-Butylmethacrylat höhere Mengen (hier 9 Gew.-% in Vergleichsversuch 6) die Schlagzähigkeit und die Wärmeformbeständigkeit deutlich vermindern ($W_{50}$ sinkt auf 33% des Vergleichswertes).

Beispiel 6 und Vergleichsversuch 7 belegen anhand der Ester der Methacrylsäure, daß der Effekt der Steifigkeitserhöhung unter Erhalt der Zähigkeit mit Methacrylsäuremethylester nicht eintritt.

In Beispiel 7 wurde ein Polybutadien mit einer Lösungsviskosität von 90 mPa s unter identischen experimentellen Bedingungen eingesetzt, wie im Vergleichsversuch 8 ein Polybutadien mit einer Viskosität von 165 mPa s. In beiden Fällen wurden 4 Gew.-% n-Butylacrylat verwendet.

Während das Produkt gemäß Beispiel 7 eine hohe Steifigkeit bei sehr hoher Zähigkeit besitzt, liegt die Steifigkeit beim Vergleichsversuch 8 zu niedrig.

Tabelle 1

| | Beispiel 1 | Beispiel 2 | Vgl.vers. 1 | Beispiel 3 | Vgl.vers. 2 | Vgl.vers. 3 | Vgl.vers. 4 | Beispiel 4 |
|---|---|---|---|---|---|---|---|---|
| Monomeres a1<br>Menge Monomeres a1 (kg) | Styrol<br>9,640 | Styrol<br>9,708 | Styrol<br>9,888 | Styrol<br>10,536 | Styrol<br>10,176 | Styrol<br>9,936 | Styrol<br>10,716 | Styrol<br>9,712 |
| Monomeres a2<br>Menge Monomeres a2 (kg) | NBMA [1]<br>0,54 | NBA [2]<br>0,48 | -<br>- | NBA<br>0,48 | NBA<br>0,84 | NBA<br>1,08 | -<br>- | NBMA<br>0,48 |
| Kautschuk | Buna [3]<br>BL 6533 | Buna<br>BL 6533 | Buna<br>BL 6533 | Buna [4]<br>HX 500 | Buna<br>HX 500 | Buna<br>HX 500 | Buna<br>HX 500 | Buna<br>BL 6533 |
| Menge Kautschuk (kg) | 1,8 | 1,8 | 1,8 | 0,96 | 0,96 | 0,96 | 0,96 | 1,8 |
| Menge Mineralöl (kg) | - | - | 0,3 | - | - | - | 0,3 | - |
| Menge Initiator (g) | - | - | - | 12 | 12 | 12 | 12 | - |
| Zugabe Initiator bei %-Umsatz | - | - | - | 0 | 0 | 0 | 0 | - |
| Menge Regler (g) | 12 | 12 | 12 | 12 | 12 | 12 | 12 | 8 |
| Zugabe Regler bei %-Umsatz | 0 | 0 | 0 | 25 | 25 | 25 | 25 | 0 |
| Temperatur (°C) | 123 | 123 | 123 | 106 | 106 | 106 | 106 | 123 |
| Rührerdrehzahl (Upm) | 55 | 55 | 55 | 140 | 140 | 140 | 140 | 65 |

| | Vgl.vers. 5 | Beispiel 5 | Vgl.vers. 6 | Beispiel 6 | Vgl.vers. 7 | Beispiel 7 | Vgl.vers. 8 |
|---|---|---|---|---|---|---|---|
| Monomeres a1<br>Menge Monomeres a1 (kg) | Styrol<br>9,872 | Styrol<br>10,006 | Styrol<br>9,406 | Styrol<br>10,314 | Styrol<br>10,014 | Styrol<br>10,054 | Styrol<br>10,054 |
| Monomeres a2<br>Menge Monomeres a2 (kg) | NBMA<br>0,12 | NBMA<br>0,48 | NBMA<br>1,08 | NBMA<br>0,48 | MMA [5]<br>0,48 | NBA<br>0,48 | NBA<br>0,48 |
| Kautschuk | Buna<br>BL 6533 | Buna<br>BL 6533 | Buna<br>BL 6533 | Buna<br>HX 500 | Buna<br>HX 500 | Buna<br>HX 500 | Diene [6]<br>55 |
| Menge Kautschuk (kg) | 1,8 | 1,5 | 1,5 | 1,2 | 1,2 | 1,44 | 1,44 |
| Menge Mineralöl (kg) | 0,2 | - | - | - | 0,3 | - | - |
| Menge Initiator (g) | - | - | - | - | - | 14 | 14 |
| Zugabe Initiator bei %-Umsatz | - | - | - | - | - | 0 | 0 |
| Menge Regler (g) | 8 | 14 | 14 | 6 | 6 | 12 | 12 |
| Zugabe Regler bei %-Umsatz | 0 | 0 | 0 | 25 | 25 | 30 | 30 |
| Temperatur (°C) | 123 | 123 | 123 | 123 | 123 | 106 | 106 |
| Rührerdrehzahl (Upm) | 65 | 55 | 55 | 170 | 170 | 120 | 120 |

[1] NBMA = n-Butylmethacrylat
[2] NBA = n-Butylacrylat
[3] Handelsprodukt der Fa. Bayer
[4] Handelsprodukt der Fa. Bayer (Viskosität: 90 mPa s)
[5] MMA = Methylmethacrylat
[6] Handelsprodukt der Fa. Firestone (Viskosität: 165 mPa s)

Tabelle 2

| | Beispiel 1 | Beispiel 2 | Vgl.vers. 1 | Beispiel 3 | Vgl.vers. 2 | Vgl.vers. 3 | Vgl.vers. 4 | Beispiel 4 | Vgl.vers. 5 | Beispiel 5 | Vgl.vers. 6 | Beispiel 6 | Vgl.vers. 7 | Beispiel 7 | Vgl.vers. 8 |
|---|---|---|---|---|---|---|---|---|---|---|---|---|---|---|---|
| Streckspannung (N/mm²) | 34,9 | 33,3 | 27,8 | 31,9 | 31,5 | 30,6 | 25,0 | 34,6 | 28,1 | 36,2 | 35,1 | 31,1 | 26,3 | 30,9 | 21,7 |
| $a_{Kl}$ (kJ/m²) | 12,0 | 12,5 | 12,3 | 9,5 | 8,8 | 8,6 | 9,8 | 11,9 | 11,8 | 11,1 | 9,7 | 9,0 | 8,9 | 14,1 | 14,0 |
| $W_{50}$ (N · m) | 32 | 28 | 31 | 17 | 9 | 6 | 16 | 30 | 28 | 21 | 7 | 12 | 13 | 42 | 43 |
| Vicat B (°C) | 90,8 | 89,8 | 89,5 | 89,7 | 85,5 | 81,3 | 90,2 | 91,1 | 90,7 | 91,1 | 84,8 | 90,7 | 90,3 | 88,7 | 89,1 |
| Viskositätszahl (ml/g) | 71 | 73 | 70 | 72 | 75 | 73 | 68 | 78 | 76 | 64 | 66 | 80 | 81 | 69 | 70 |
| $\bar{M}_\eta$ (kg/mol) | 156 | 161 | 153 | 159 | 167 | 161 | 148 | 175 | 170 | 137 | 142 | 181 | 183 | 150 | 153 |
| Schmelzfließindex (cm3/10') | 5,8 | 5,5 | 6,1 | 6,1 | 6,4 | 7,2 | 6,2 | 4,3 | 4,5 | 7,3 | 7,4 | 3,3 | 3,2 | 6,1 | 6,4 |
| $d_{50}$ (µm) | 0,33 | 0,34 | 0,32 | 0,64 | 0,64 | 0,61 | 0,65 | 0,27 | 0,26 | 0,35 | 0,36 | 0,75 | 0,73 | 0,62 | 1,43 |
| Sauerstoffgehalt (%) | 1,0 | 1,0 | - | 1,0 | 1,8 | 2,2 | - | 0,9 | 0,2 | 0,9 | 2,0 | 1,0 | 1,3 | 1,0 | 1,0 |
| Glanz | 85 | 84 | 80 | 76 | 76 | 77 | 70 | 84 | 81 | 86 | 90 | 70 | 65 | 77 | 52 |
| Teilchenform | Kapseln | Kapseln | Kapseln | Zellen | Zellen | Zellen | Zellen | Kapseln | Kapseln | Kapseln | Kapseln | Zellen | Zellen | Zellen | Zellen |
| Iodzahl | 39,5 | 40,1 | 40,3 | 35,7 | 35,9 | 36,1 | 35,5 | 39,8 | 40,3 | 33,4 | 34,1 | 44,1 | 44,5 | 51,9 | 52,1 |

## Patentansprüche

1. Thermoplastische Formmasse aus einer Hartmatrix A aus mindestens einem vinylaromatischen Monomeren a1 und mindestens einem polaren Comonomeren a2 und einer Weichphase B, wie sie erhalten wird durch Polymerisation von a1 und a2 in Masse oder in Lösung in Gegenwart einer gelösten

elastomeren Pfropfgrundlage, enthaltend als Comonomere(s) a2 1,5 bis 6,5 Gew.-% eines Esters der Acryl- oder Methacrylsäure.

2. Formmasse nach Anspruch 1, enthaltend als Comonomere(s) a2 einen (Meth)acrylsäureester mit einem Alkohol mit 2 bis 5 C-Atomen.

3. Formmasse nach Anspruch 2, enthaltend als Comonomere(s) a2 einen (Meth)acrylsäureester mit einem Alkohol mit 3 bis 5 C-Atomen.

4. Formmasse nach Anspruch 1, enthaltend Kautschukpartikel in Form von Kapsel- oder Zellteilchen mit einem mittleren Durchmesser von 200 bis 1000 nm.

5. Formmasse nach Anspruch 1, enthaltend 3 bis 25 Gew.-% Elastomer, bestimmt durch die Jodzahl, ausgewählt aus Butadien- und/oder Isoprenpolymeren.

6. Formmasse nach Anspruch 1, enthaltend übliche Zusatz- und Hilfsstoffe.

7. Verwendung der Formmasse nach Anspruch 6 zur Herstellung von Formteilen durch Spritzguß.